# EUROPÄISCHE PATENTSCHRIFT

(11) **EP 2 807 722 B1**
(45) Veröffentlichungstag und Bekanntmachung des Hinweises auf die Patenterteilung: **08.06.2016**
(21) Anmeldenummer: 13701208.4
(22) Anmeldetag: 21.01.2013
(51) Int. Cl.: H02K 1/14, H02K 21/16, H02K 15/02, H02K 37/14, H02K 3/52, H02K 1/02

(54) **ELEKTROMASCHINE**
ELECTRIC MACHINE
MACHINE ÉLECTRIQUE

(30) Priorität: 23.01.2012 DE 102012001115
(43) Veröffentlichungstag der Anmeldung: 03.12.2014
(73) Patentinhaber: Sew-Eurodrive GmbH & Co. KG, 76646 Bruchsal (DE)
(72) Erfinder: DREHER, Florian, 76646 Bruchsal (DE)
(86) Internationale Anmeldenummer: PCT/EP2013/000171
(87) Internationale Veröffentlichungsnummer: WO 2013/110450

(56) Entgegenhaltungen:
- EP-A1- 1 420 503
- EP-A2- 2 006 977
- EP-A2- 2 006 978
- EP-A2- 2 573 918
- DE-A1-102005 020 952
- DE-A1-102007 017 050
- US-A1- 2002 070 627
- US-A1- 2007 090 720
- US-A1- 2007 145 854
- US-A1- 2012 013 209

## Beschreibung

Die Erfindung betrifft eine Elektromaschine.

Es ist allgemein bekannt, dass Elektromaschinen einen Stator und einen relativ zu diesem drehbar gelagerten Rotor mit Aktivteil aufweisen. Dabei werden mehrere magnetische Wechselfelder zu einem Drehfeld überlagert, so dass in Wechselwirkung mit einem Erregerfeld des Rotors eine Drehbewegung erzeugt wird.

**Aus der** EP 1 420 503 A1 **ist ein Motorgehäuse bekannt.**

**Aus der** US 2012/013209 A1 **ist ein Verfahren zum Herstellen kleiner Elektromotoren bekannt.**

**Aus der** EP 2 573 918 A2 **ist ein Statorkern eines Stators bekannt.**

**Aus der** EP 2 006 977 A2 **ist ein Alternator für eine rotierende elektrische Maschine bekannt.**

**Aus der** US 2002/070627 A1 **ist ein Statorsegment bekannt, in welches eine Ringspule eingelegt ist.**

**Aus der** US 2007/145854 A1 **ist ein Klauenpolmotor bekannt.**

**Aus der** DE 10 2005 020 952 A1 **ist ein Phasenmodul für eine Transversalflussmaschine bekannt.**

**Aus der** DE 10 2007 017050 A1 **ist ein Stator für einen Elektromotor bekannt.**

**Aus der** US 2007/090720 A1 **ist ein Klauenpolmotor bekannt.**

**Aus der** EP 2 006 978 A2 **ist ebenfalls ein Klauenpolmotor bekannt, wobei die Klauen veränderlich.**

Der Erfindung liegt daher die Aufgabe zugrunde, eine Elektromaschine kompakt **und mit hoher Antriebsleistung aus**zubilden, wobei die Herstellung einfach ausführbar sein soll.

Erfindungsgemäß wird die Aufgabe bei der Elektromaschine nach den in Anspruch 1 angegebenen Merkmalen gelöst.

Wichtige Merkmale der Erfindung bei der Elektromaschine, insbesondere Transversalflussmaschine, sind, dass der Stator aus einem Stapel von Strangsegmenten zusammengesetzt ist,
wobei jedes Strangsegment zumindest ein Statorsegment und eine Statorwicklung, insbesondere Einzelwicklung, aufweist,
wobei jedes Statorsegment einen ringförmigen Statorsteg aufweist, an welchem Polschuhe angeformt sind, insbesondere welche sich orthogonal zum Steg, also nach radial innen, erstrecken und/oder welche auf den Rotor zu sich erstrecken und/oder welche zwischen Rotor und ringförmigem Statorsteg angeordnet sind,
insbesondere wobei die Polschuhe gleichartig ausgeformt sind,
wobei die axiale Breite des Polschuhs mit zunehmendem Radialabstand abnimmt,
wobei der zugehörige Verlauf zwischen einem ersten und einem zweiten Verlauf angeordnet ist,
wobei der erste Verlauf eine lineare Funktion des Radialabstandes ist, insbesondere wobei der zum ersten Verlauf gehörige Polrücken eine ebene Fläche ist,
wobei der zweite Verlauf eine Kreisfunktion, insbesondere Kreisabschnittsfunktion, ist, insbesondere wobei der zum zweiten Verlauf gehörige Polrücken eine Zylinderabschnittsfläche ist.

Von Vorteil ist dabei, dass zwar der erste Verlauf einfach zu fertigen wäre, jedoch wird dadurch das Risiko bewirkt, dass bei Feldstärkewerten, die noch nicht zur Sättigung der luftspaltseitigen Oberfläche des Polschuhs führen, eine zumindest teilweise Sättigung des Polschuhs erreicht wird. Denn der lineare Übergang ist nicht bauchig oder konvex. Somit müssen die Feldlinien durch eine Verengung auf ihrem Weg von der luftspaltseitigen Oberfläche des Polschuhs zum Statorsteg hindurch und bewirken dann bei entsprechender Feldstärke Sättigung in diesem verengten Bereich.

Durch die bauchige Ausformung wird die Verengung erweitert und somit die Sättigung vermieden.

Allerdings ist vorteiligerweise die bauchige Ausformung weniger bauchig als der zweite Verlauf. Denn bei Überschreiten der bauchigen Form des zweiten Verlaufs wird der für die Statorwicklung zur Verfügung stehende Wickelraum vermindert und die Leistung der Elektromaschine reduziert, also kein kompakter Aufbau möglich.

Denn die Erfindung bietet eine kompakte Lösung, also eine hohe Antriebsleistung und ein hohes Drehmoment pro Bauvolumen der Elektromaschine.

Die Erfindung lehrt also, dass sozusagen die Bauchigkeit vorhanden sein soll, jedoch unterhalb des durch den zweiten Verlauf beschriebenen Grenzverlaufs.

Dabei ist die Umlenkung der Feldlinien von der luftspaltseitigen Seite des Polschuhs, welche in axialer Richtung weiter ausgedehnt ist als in Umfangsrichtung, zum Statorsteg hin, wobei die Übergangsfläche vom Polschuh in den ringförmigen Statorsteg in Umfangsrichtung weiter ausgedehnt ist als in axialer Richtung.

Die erfindungsgemäße Polschuhform, insbesondere Formverlauf des Polschuhrückens, ermöglicht eine im Wesentlichen konstante Flussdichte auf der luftspaltseiteigen

Polschuhfläche. Hierdurch sind die Regelungseigenschaften verbessert und ein hohes Drehmoment erreichbar bei möglichst kompakter Bauweise.

Weiterer Vorteil ist auch, dass die mechanische Stabilität verbessert wird und somit auch die Geräuschentwicklung vermindert und die Schwingungsneigung ebenfalls vermindert wird.

Bei der Erfindung ist vorteiligerweise kein magnetisches Drehfeld notwendig.

Bei einer vorteilhaften Ausgestaltung ist der Polschuh eines, insbesondere des ersten, Statorsegments an seiner vom anderen Statorsegment des Strangsegments abgewandten Seite eben ausgeführt, insbesondere zur Ermöglichung eines möglichst engen und berührenden Aufbau des Stapels der Strangsegmente. Von Vorteil ist dabei, dass die Strangsegmente dicht aneinander stapelbar sind, also ein kompakter Aufbau ermöglicht ist.

Erfindungsgemäß ist der zugehörige Verlauf der axialen Breite als Funktion des Radialabstandes aus einem bauchigen und/oder konvexen Abschnitt und einem konkaven Abschnitt zusammengesetzt, wobei der konkave Abschnitt eine mindestens fünfmal kürzere Bogenlänge aufweist als der andere Abschnitt. Von Vorteil ist dabei, dass die Gefahr von Kantenbrüchen reduziert ist und keine Einstiche oder dergleichen notwendig sind. Zur Fertigung der Radien sind entsprechende spanende Herstellverfahren oder Sinterverfahren verwendbar.

Bei einer vorteilhaften Ausgestaltung weist die luftspaltseitige Oberfläche des Polschuhs einen im Wesentlichen gleichgroßen oder höchstens um 20 % unterschiedlichen Flächenwert auf im Vergleich zur Übergangsfläche zum Statorsteg hin. Von Vorteil ist dabei, dass die Feldlinien keiner Verengung ausgesetzt sind und somit keine Sättigung eintritt.

Bei einer vorteilhaften Ausgestaltung weist der Polschuh einen Polrücken auf, insbesondere wobei der Polrücken zumindest teilweise zur Statorwicklung und/oder zumindest teilweise zum anderen Statorsegment hin gewandt ist,
wobei der Polrücken die zum Rotor hin zugewandte, luftspaltseitige Fläche des Polschuhs mit dem Statorsteg, insbesondere mit der Statorstegoberfläche, verbindet,
wobei der Polrücken bauchig ausgeführt ist oder aus zwei, nicht zueinander parallelen, ebenen Flächenstücken zusammengesetzt ist. Von Vorteil ist dabei, dass die Gefahr von Kantenbrüchen reduziert ist.

Bei einer vorteilhaften Ausgestaltung ist der Polschuh derart geformt, dass im Wesentlichen kein Teilbereich des Polschuhs in Sättigung geht, solange der Oberflächenbereich der luftspaltseitigen, insbesondere also der zum Rotor hin gewandten, Seitenfläche des Polschuhs noch nicht in Sättigung geht. Von Vorteil ist dabei, dass keine Verengung für die Feldlinien auftritt und somit der Wirkungsgrad der Elektromaschine möglichst hoch ist.

Erfindungsgemäß weist der Polschuh eine mit zunehmendem Radialabstand zunehmende Breite in Umfangsrichtung auf,
insbesondere wobei mit zunehmendem Radialabstand die Zunahme der Breite in Umfangsrichtung im Wesentlichen in dem Maße, insbesondere umgekehrt proportional, verläuft wie die axiale Breite abnimmt. Von Vorteil ist dabei, dass die Feldlinien von der in axialer Richtung breiten luftspaltseitigen Polschuhfläche in die zum Stator hin gewandte Übergangsfläche des Polschuhs, welche in Umfangsrichtung breit ist, umlenkbar sind, ohne dass die Feldlinien durch eine Verengung müssen, der Wickelraum für die Statorwicklung reduziert wird und ohne dass der Luftspalt zwischen den Statorsegmenten eines selben Strangsegments verringert wird.

Bei einer vorteilhaften Ausgestaltung ist der Polschuh symmetrisch zu einer Symmetrieebene ausgeformt, wobei die Symmetrieebene durch den Schwerpunkt des Polschuhs geht und von der vom Schwerpunkt ausgehenden, radialen Richtung und von der axialen Richtung aufgespannt wird. Bei einer alternativen vorteilhaften Ausgestaltung ist der Polschuh symmetrisch zu einer Symmetrieebene ausgeformt, wobei die Symmetrieebene durch den Schwerpunkt des Polschuhs geht und die Normalenrichtung Tangentialrichtung am Schwerpunkt ist. Von Vorteil ist dabei, dass die Statorsegmente eines Strangsegments gleichartig ausführbar sind und somit nicht zwei Teile sondern nur ein Teil im Lager vorrätig gehalten werden muss.

Bei einer vorteilhaften Ausgestaltung ist eine Kante des Polschuhs verbreitert ausgeführt. Von Vorteil ist dabei, dass eine Reduzierung der Gefahr eines Kantenbruchs erreichbar ist.

Bei einer vorteilhaften Ausgestaltung weicht mit zunehmendem Radialabstand der Flächenwert der Schnittfläche des Polschuhs mit einer ersten Fläche im Wesentlichen dem Flächenwert der luftspaltseitigen, insbesondere also der zum Rotor hin gewandten, Seitenfläche des Polschuhs gleicht oder zumindest um weniger als 10% oder 20% ab,
- wobei die erste Fläche eine Tangentialebene ist, die zur Rotorwellenachse den jeweiligen Radialabstand aufweist und/oder die zur Rotorwellenachse parallel ausgerichtet ist und/oder die den Radialabstand aufweist und/oder die senkrecht zur Symmetrieebene ausgerichtet ist und/oder deren Normalenrichtung die Rotorwellenachse mit dem Schwerpunkt des Polschuhs verbindet
- oder wobei die erste Fläche eine Zylindermantelfläche ist, die zur Rotorwellenachse den jeweiligen Radialabstand aufweist und/oder die parallel zur Rotorwellenachse ausgerichtet ist.
Von Vorteil ist dabei, dass eine Sättigung des Materials des Polschuhs vermeidbar ist, solange die luftspaltseitige Fläche des Polschuhs beziehungsweise die entsprechend oberflächennahen Bereiche noch nicht in Sättigung übergegangen ist.

Bei einer vorteilhaften Ausgestaltung ist der Stapel in einem Gehäuseteil aufgenommen,
insbesondere wobei das Gehäuseteil einen axial verlaufenden Kabelkanal aufweist, insbesondere eine axial verlaufende Vertiefung an seiner dem Stapel zugewandten Fläche, insbesondere Innenfläche.
insbesondere wobei das Gehäuseteil kraftschlüssig mit dem Stapel verbunden ist,
insbesondere wobei das Gehäuseteil thermisch aufgeschrumpft ist auf den Stapel. Von Vorteil ist dabei, dass eine feste Verbindung in einfacher Weise herstellbar ist.

Bei einer vorteilhaften Ausgestaltung weist jedes Statorsegment zwei radial verlaufende, in Umfangsrichtung voneinander mit halbem Polschuhabstand beabstandete Vertiefungen, insbesondere Schlitze, auf,
insbesondere so dass beim Zusammenfügen zweier Statorsegmente zu einem Strangsegment die Schlitze in Deckung bringbar sind und zur Bildung eines Durchlasses für die Zuleitung und/oder Ableitung der jeweiligen Statorwicklung. Von Vorteil ist dabei, dass zwei gleichartige Statorsegmente zu einem Strangsegment zusammenfügbar sind und dabei die Schlitze in Deckung bringbar sind. Denn die Statorsegmente werden bei dem Zusammenfügen gegeneinander verdreht, damit ein jeweiliger Polschuh des ersten Statorsegments in Umfangsrichtung zwischen Polschuhe des zweiten Statorsegments im gleichen Radialabstandsbereich positioniert wird.

Bei einer vorteilhaften Ausgestaltung ist das Statorsegment aus gepresstem oder gesintertem Eisenpulver gefertigt. Von Vorteil ist dabei, dass eine einfache und kostengünstige einstückige Herstellung des Statorsegments ermöglicht ist.

Wichtige Merkmale bei dem Verfahren zum Herstellen einer Elektromaschine sind, dass die Schlitze bei der Herstellung des Stapels von einer Fertigungsmaschine zum Ausrichten, insbesondere zum Einstellen des relativen Verdrehwinkels, der Strangsegmente zueinander detektiert und/oder verwendet werden. Von Vorteil ist dabei, dass eine besonders einfache Herstellung ermöglicht ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist ein Statorsegment 1 eines Elektromotors in Schrägansicht gezeigt.
In der Figur 2 ist ein weiteres gleichartiges Statorsegment 1 des Elektromotors in Schrägansicht gezeigt, wobei eine Statorwicklung 20 als Ringwicklung eingelegt ist radial zwischen die Polschuhe und das Statorjoch 6.
In der Figur 3 ist ein Statorstrangsegment des Elektromotors in Schrägansicht gezeigt, wobei das Statorstrangsegment durch Zusammenfügen der Statorsegmente 1 der Figur 1 und der Figur 2 erzeugt ist.
In der Figur 4 ist das Statorsegment nach Figur 1 mit nach radial innen gerichteten, in Umfangsrichtung regelmäßig voneinander beabstandeten Polschuhen gezeigt, wobei ein vereinfacht dargestellter Polschuh vergrößert dargestellt ist.
In der Figur 5 ist ein Gehäuseteil 52 gezeigt, in welchem ein Stapel von Statorstrangsegmenten nach Figur 3 eingefügt ist, wobei ein axial verlaufender Kabelkanal 50 im Gehäuseteil 52 angeordnet ist.
In der Figur 6 ist ein vergrößerter Ausschnitt der Figur 5 gezeigt.
In der Figur 7 ist ein angeschnittenes Statorsegment 1 gezeigt, wobei ein Polschuh die Schnittfläche 70 aufweist.
In der Figur 8 ist die Schnittfläche 70 des Polschuhs aus Figur 7 dargestellt, wobei statt des vereinfachten, aus linearen Stücken zusammengesetzten Oberflächenverlaufs des Polschuhrückens andere Verläufe (80, 81, 82) dargestellt sind.
In der Figur 9 ist der erfindungsgemäße Verlauf 90 gezeigt, wobei Kanten gerundet ausgeführt sind.

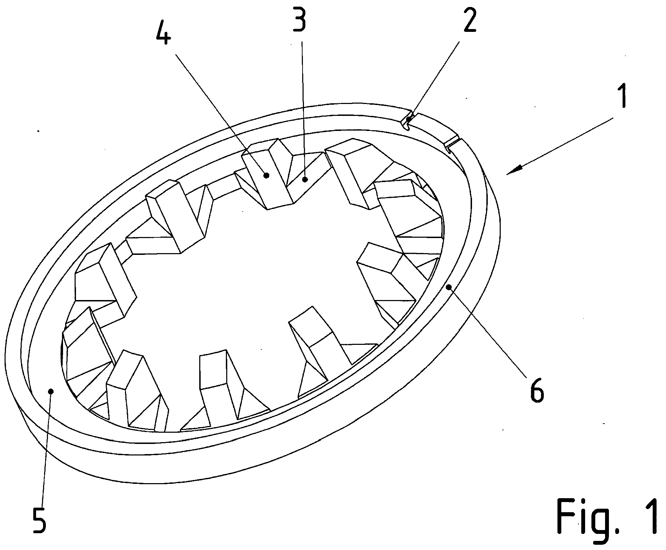

Wie in Figur 1 gezeigt, weist das Statorsegment 1 nach radial innen gerichtete, also zum nicht dargestellten Rotor hin gerichtete Polschuhe auf, die in Umfangsrichtung voneinander regelmäßig beabstandet sind.

Dabei sind die Polschuhe von einem ringförmigen Statorsteg 5 gehalten, der an seinem radial äußeren Endbereich ein axial, also in Rotorwellenachsrichtung, hervor ragenden Statorjoch 6 aufweist.

Die nach radial innen gerichtete Fläche 4 des Polschuhs, also die zum Luftspalt zwischen Stator und Rotor hin gewandte Seite des Polschuhs ist eben oder gekrümmt, also mit einem Radius, welcher dem Radius der Statorinnenbohrung entspricht, ausgeführt.

Das am Rotor vorgesehene und zur Fläche 4 hin gewandte Aktivteil des Rotors ist beispielsweise mit Dauermagneten ausführbar, welche in Umfangsrichtung voneinander regelmäßig beabstandet sind, wobei die Magnetisierungsrichtung in Umfangsrichtung nächstbenachbarter Dauermagnete zueinander entgegengesetzt ausgerichtet ist.

Statt der Dauermagnete sind auch entsprechend angeordnete Elektromagnete mit Erregerwicklung vorsehbar. Weiter alternativ ist als Aktivteil auch ein Kurzschlusskäfig oder ein Reluktanzläufer einsetzbar.

Das Aktivteil, insbesondere die Dauermagnete oder Elektromagnete, ist im Wesentlichen axial ähnlich oder gleich weit ausgedehnt wie die Polschuhe. Somit ist ein hoher Wirkungsgrad erreichbar.

Von der Fläche 4 ausgehend weist der Übergangsbereich zum Statorsteg 6 eine seitliche Verbreiterung auf, welche sich in und entgegen der Umfangsrichtung erstreckt. Dabei ist die in Umfangsrichtung vorgesehene Breite der Verbreiterung mit zunehmendem Radialabstand größer.

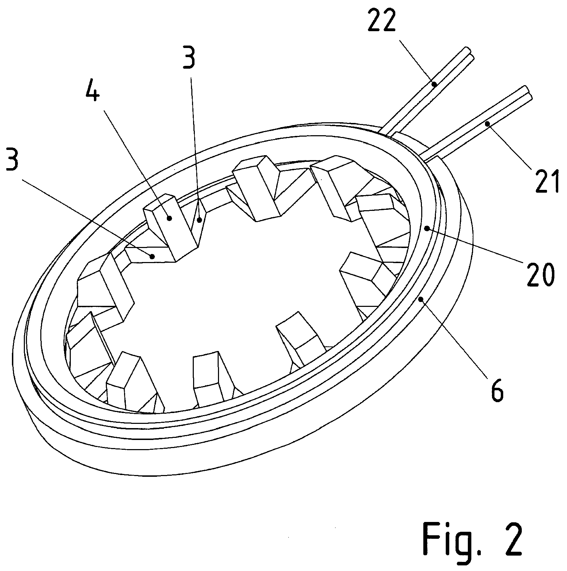

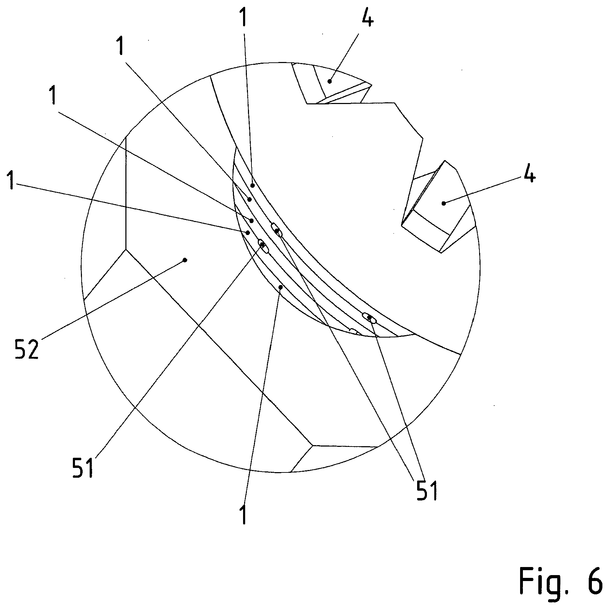

Der Polschuhrücken 42 ist bauchig ausgeführt, wobei zur vereinfachten Darstellung in den Figuren 1, 2, 3, 4, 5, 6, 7 zur Darstellung der bauchigen Form zwei Planflächenabschnitte verwendet sind.

Die seitliche Verbreiterung 3 und der bauchige Verlauf des Polschuhrückens 42 sind aufeinander abgestimmt und zwar derart, dass das an den Flächen 4 eintretende magnetische Feld in den Statorsteg eingeleitet wird, ohne dass Feldlinien im Polschuh konzentriert werden. Der Polschuh weist also eines derartige Ausformung auf, dass zumindest im Wesentlichen kein Teilbereich des Polschuhs in Sättigung geht, solange nicht Sättigung im Oberflächenbereich der Fläche 4 eintritt.

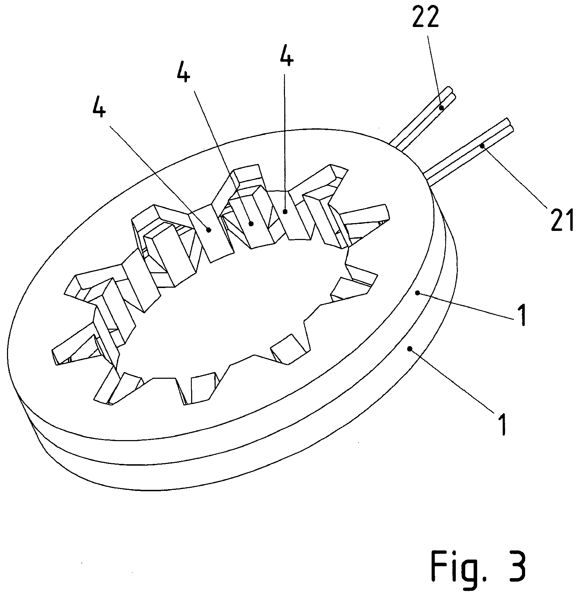

Solange also an der Fläche 4 die magnetische Feldstärke unter dem für Eintreten von Sättigung kritischen Wert bleibt, tritt auch keine Sättigung im Polschuh auf. Der Polschuh weist also genügend viel, die Feldlinien durchleitendes Material auf. Dabei ist allerdings die Polschuhform derart gewählt, dass möglichst viel Wickelraumbereich für die Statorwicklung 20 verbleibt. Außerdem verbleibt auch ein genügend großer Luftspalt zu den Polschuhen des weiteren Statorsegments 1, welches gemäß Figur 3 zusammen mit dem ersten Statorsegment 1 ein Statorstrangsegment bildet.

Wichtig ist hierbei auch, dass die Fläche 4 sich axial derart weit erstreckt, dass sie im Wesentlichen den vom Statorstrangsegment überdeckten axialen Bereich überdeckt. Somit ist eine maximale Ausnutzung gewährleistet.

Da die Fläche 4 weiter in axialer Richtung als in Umfangsrichtung ausgedehnt ist, werden die Feldlinien mittels des Polschuhs zum Übergang zum Statorsteg 5 hin umgelenkt auf eine gleich große Fläche, die aber in Umfangsrichtung weiter ausgedehnt ist als in axialer Richtung. Die Feldlinien werden - Groß gesprochen - sozusagen schraubenförmig umgelenkt. Bei dieser Umlenkung ist aber auf dem Weg der Feldlinien stets genügend Material vorhanden, so dass im Wesentlichen nirgends im Polschuh Sättigung eintritt.

Der Polschuh weist also eine derartige Ausformung aus, dass von radial innen nach radial außen der Polrücken im Wesentlichen in dem Maße axial schmäler wird, in welchem sich der Polschuh seitlich, also in Umfangsrichtung, verbreitert. Dabei wird die exakte Form des Polschuhs derart gewählt, dass eine einfache Fertigung erreichbar ist.

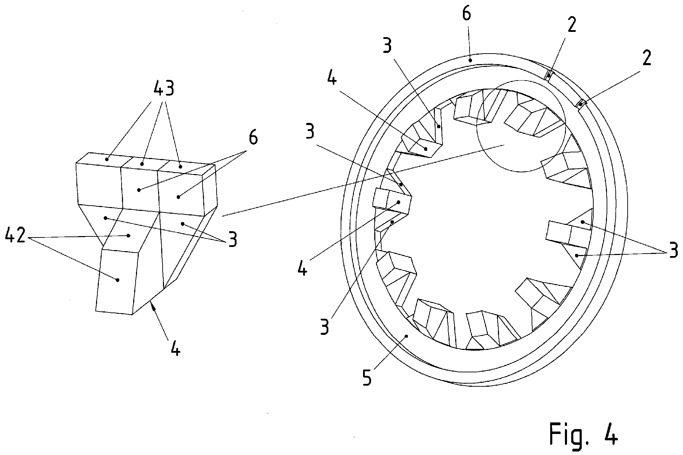

In Figur 4 ist eine Übergangsfläche 42 gezeigt, in welche die Feldlinien von der Fläche 4 ausgehend umgeleitet werden. Die Übergangsfläche 42 ist zwar parallel zur Fläche 4 ausgebildet aber in Umfangsrichtung weiter ausgedehnt als in axialer Richtung, wohingegen die Fläche 4 in axialer Richtung weiter ausgedehnt ist als in Umfangsrichtung.

Das Statorsegment 1 ist aus einem magnetisierbaren Material, wie beispielsweise gepresstes oder gesintertes Eisenpulver (SMC), ein- oder mehrstückig ausgeführt.

Wie in Figur 3 gezeigt, sind zwei gleichgeformte Statorsegmente 1 zusammengefügt, wobei eine als Ringwicklung ausgeführte Statorwicklung 20 im zwischen den Statorstegen 5 der Statorsegmente angeordneten Zwischenraum eingelegt ist. Dabei sind die Statorjoche 6 der beiden Statorsegmente 1 zueinander gewandt und berühren sich, so dass das magnetische Feld im Wesentlichen ungestört übertreten kann von einem ersten Statorsegment 1 zu einem zweiten Statorsegment 1.

Da die beiden Statorsegmente 1 zueinander verdreht sind um den halben Umfangswinkel, welcher zwischen zwei in Umfangsrichtung nächstbenachbarten Polschuhen eines jeweiligen Statorsegments 1 vorhanden ist. Somit wechseln sich in Umfangsrichtung die Polschuhe der beiden Statorsegmente 1 ab. In Umfangsrichtung folgt also auf jeden Polschuh eines ersten Statorsegments 1 ein Polschuh des anderen Statorsegments 1.

Jedes Statorsegment 1 weist zwei in Umfangsrichtung voneinander beabstandete Vertiefungen 2 auf. Die Vertiefungen 2 sind vorzugsweise als im Statorjoch 6 radial sich erstreckende Schlitze ausgeführt, insbesondere sind die Schlitze an der dem anderen Statorsegment 1 des Strangsegments zugewandten axialen Stirnseite angeordnet.

Somit kommen die Schlitze der beiden Statorsegmente 1 des Strangsegments bei geeignet gewähltem Verdrehwinkel in Deckung und bilden dann zusammen eine Ausnehmung 51, insbesondere Durchlass für die Ableitung 22 und Zuleitung 21 der Statorwicklung 20.

Da die beiden Schlitze 2 in Umfangsrichtung voneinander um wiederum den halben Umfangswinkel beabstandet sind, welcher zwischen zwei in Umfangsrichtung nächstbenachbarten Polschuhen eines jeweiligen Statorsegments 1 vorhanden ist, kommen die beiden Schlitze 2 eines ersten Statorsegments mit den beiden Schlitzen 2 des anderen Statorsegments 1 in Deckung.

Die Schlitze sind von radial außen am Stapel sichtbar, solange der Stapel noch nicht in das Gehäuseteil eingeführt ist. Somit sind diese Schlitze von einer Fertigungsmaschine mit Bilderfassung erkennbar und zur Einstellung des relativen Verdrehwinkels zwischen den Strangsegmenten verschiedener Phasen, also zwischen den mit verschiedenen Phasenströmen bestromten Strangsegmenten, verwendbar.

**Vorzugsweise ist die Statorwicklung in einem Spulenkörper, insbesondere aus Kunststoff, aufgenommen, wobei der Spulenkörper die Schlitze, also Ausnehmungen oder Vertiefungen (51), zumindest teilweise auskleidet, insbesondere wobei der Spulenkörper mit der von ihm zumindest teilweise umgebenen Statorwicklung in einem Strangsegment aufgenommen ist, insbesondere wobei die Statorwicklung als Ringwicklung ausgeführt ist.**

Die Phasenströme sind beispielsweise Strangströme eines Drehstromsystems.

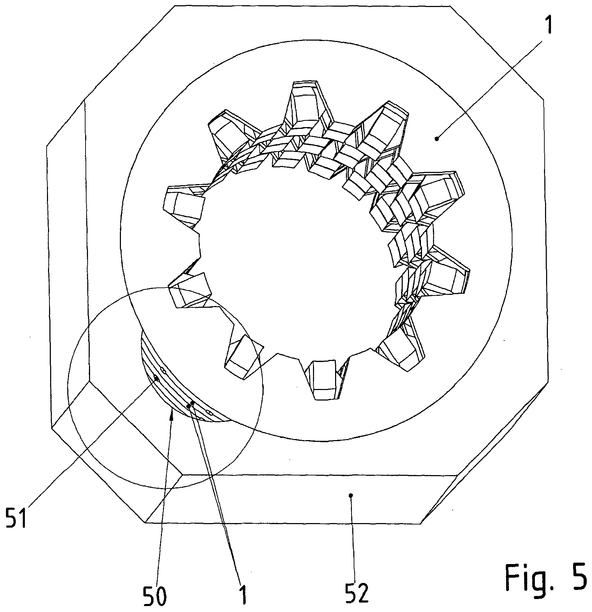

Wie in Figur 5 gezeigt, sind zur Bildung der Elektromaschine mehrere, jeweils gleichartig aus zwei Statorsegmenten und einer Statorwicklung zusammengesetzte Strangsegmente in axialer Richtung hintereinander gestapelt, wobei die Strangsegmente gegeneinander verdreht sind, wenn sie mit verschiedenen Phasenströmen (U, V, W) bestromt werden.

Zu gleichen Phasenströmen gehörende Strangsegmente sind nicht oder weniger stark verdreht als wenn sie mit verschiedenen Phasenströmen (U, V, W) bestromt werden oder nur um ganzzahlige Vielfache des obengenannten Umfangswinkels zwischen den Polschuhen eines jeweiligen Statorsegments 1.

Die in axialer Richtung aufeinander gestapelt angeordneten Strangsegmente berühren sich, wobei eine dünne elektrisch isolierende Schicht zwischen ihnen eingebracht sein kann. Diese dünne elektrisch isolierende Schicht verbessert den Wirkungsgrad der Maschine. Der Stapel ist in einer Ausnehmung eines den Stapel aufnehmenden Gehäuseteils 52 aufgenommen, wobei das Gehäuseteil 52 vorzugsweise aufgeschrumpft und/oder klebend verbunden ist, insbesondere kraftschlüssig verbunden ist. Hierzu wird das Gehäuseteil 52 vor dem Verbinden auf eine höhere Temperatur, insbesondere eine um mindestens 50 Kelvin oder mindestens 100 Kelvin gebracht als der Stapel. Somit ist das Einfügen des Stapels in das Gehäuseteil 52 in einfacher Weise ermöglicht und nach Ausgleich der Temperatur eine kraftschlüssige Verbindung erreicht.

Das Gehäuseteil 52 ist vorzugsweise aus Metall, wie beispielsweise Aluminium, gefertigt.

Die jeweiligen Ableitungen 22 und Zuleitungen 21 werden in dem axial verlaufenden Kabelkanal 50 herausgeführt. Der Kabelkanal 50 ist vorzugsweise als Nut in die Innenwandung der Aufnahmeöffnung zur Aufnahme des Stapels eingearbeitet.

Die Statorsegmente 1 eines jeweiligen Strangsegments berühren sich nur an ihren axialen Stirnseiten im Bereich der axial aufeinander zu hervor ragenden Statorjoche 6. In den übrigen Oberflächenbereichen ist ein Mindestluftspalt zwischen den beiden Statorsegments 1 eingehalten. Statt Luft ist die Statorwicklung 20 und/oder Vergussmasse und/oder Isolationspapier vorgesehen.

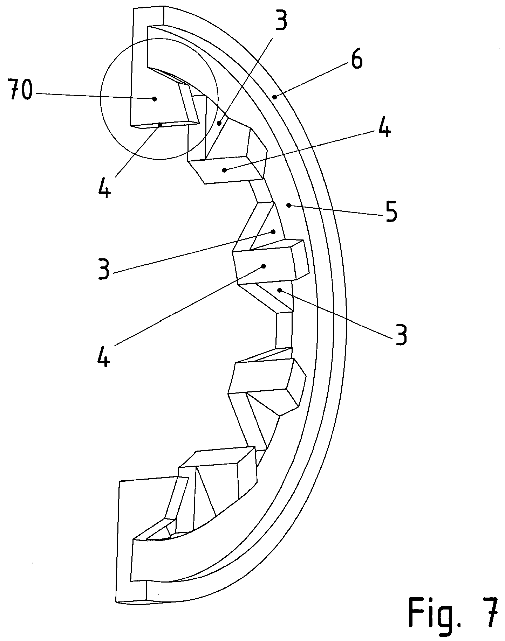

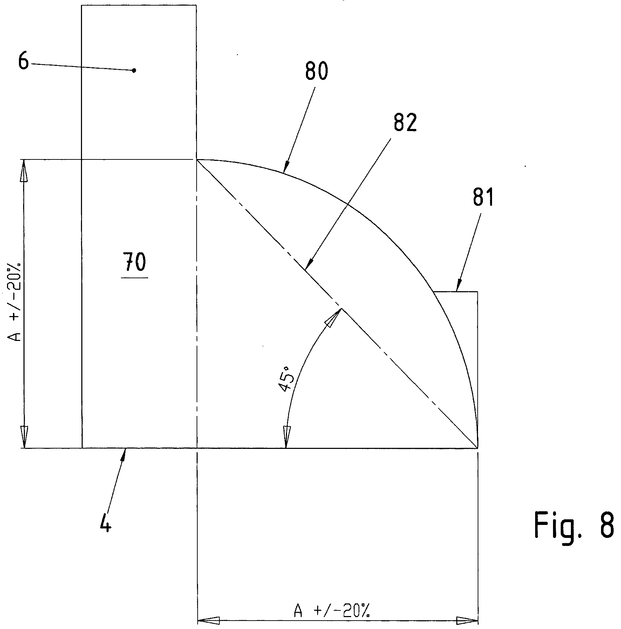

Die Schnittfläche 70 aus Figur 7 ist in Figur 8 erläutert. In Figur 8 ist der Verlauf der Oberfläche des Polschuhrückens 42 erläutert. Hierbei sind je nach gewünschtem Fertigungsaufwand verschiedene Verläufe wählbar.

Der lineare, also ebene Verlauf 82 ist besonders einfach zu fertigen, bewirkt aber schon bei unkritischen Feldstärken eine Sättigung von Teilbereichen des Polschuhs, auch wenn die Fläche 4 noch nicht in Sättigung geht.

Bei dem bauchigen Verlauf 80 folgt der geschnittene Polschuhrücken 42 einem Kreisabschnitt.

Die erfindungsgemäßen Verläufe der Polschuhrücken 42 weisen einen zwischen den Verläufen 80 und 82 liegenden Verlauf auf. Somit ist der erfindungsgemäße Polschuhrücken 42 im Wesentlichen bauchig ausgeführt und die Abnahme des Polschuhrückens bei zunehmendem Radialabstand wird von einer Zunahme der seitlichen Verbreiterung in Umfangsrichtung begleitet.

Da die zwischen Polschuhrücken 42 und Fläche 4 liegende Kante die Gefahr eines Kantenbruchs beinhaltet, ist eine Verdickung gemäß dem Verlauf 81 oder eine Verrundung in diesem Bereich vorteilig.

Der Mittelpunkt des zum Verlauf 80 gehörenden Kreismittelpunkts liegt auf der Ecke des zum Verlauf 82 gehörenden gleichschenkligen rechtwinkligen Dreiecks.

Der Polschuhrücken 42, welcher zum Verlauf 80 gehört, ist also einem Zylinderwandabschnitt entsprechend ausgeführt. Denn in Figur 8 ist nur der mittig angeordnete Schnitt gezeigt ist.

Der Polschuhrücken 42, welcher zum Verlauf 82 gehört, ist also einem ebenen Flächenabschnitt entsprechend ausgeführt. Denn in Figur 8 ist nur der mittig angeordnete Schnitt gezeigt ist.

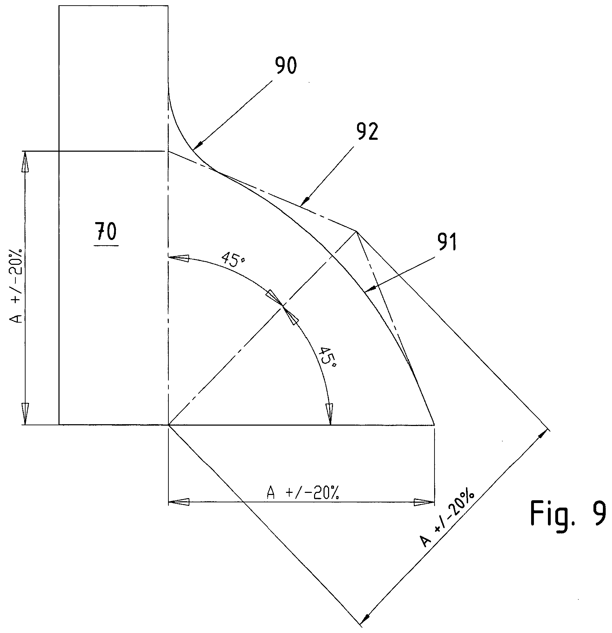

Besonders vorteilhaft ist der in Figur 9 gezeigte Verlauf des Schnitts des Polschuhrückens. Hierbei ist sind beim Verlauf 92 zwei lineare Abschnitte zusammengesetzt, die einen Winkel zwischen 0° und 90°, insbesondere zwischen 15° und 50°, aufweisen. Dabei ist im Schnitt gemäß Figur 9 die Länge der beiden linearen Abschnitte gleich oder um weniger als 30% unterschiedlich.

Da Verrundungen die Gefahr von Kantenbruch reduzieren, ist in Figur 9 ein solcher Verlauf gezeigt. Dieser weist einen ersten Kreisabschnitt 90 und einen zweiten Kreisabschnitt 91 auf, wobei ein stetiger glatter und differenzierbarer Übergang zwischen den Kreisabschnitten 90 und 91 vorhanden ist. Die Länge, also Bogenlänge, des Kreisabschnitts 90 beträgt zwischen 10% und 50%, insbesondere zwischen 15% und 35% , der Länge des Kreisabschnitts 91.

Der Polschuhrücken 42 verläuft entsprechend geschwungen, da in Figur 9 nur der mittig angeordnete Schnitt gezeigt ist.

Zwischen dem jeweiligen Statorsegment 1 und der Statorwicklung 20 ist zur Verbesserung des Isolierabstandes Isolierpapier angeordnet. Alternativ wird die Wicklung mit isolierendem Kunststoff umspritzt.

Der Kreisbogenabschnitt beim Verlauf 90 verläuft konkav; der Kreisbogenabschnitt beim Verlauf 91 verläuft konvex. Der Verlauf 92 ist vereinfacht ausgeführt, also der Polrücken 42 aus zwei ebenen Flächen zusammengesetzt.

Die erfindungsgemäße Elektromaschine ist also auch als Klauenpol-Transversalflussmaschine bezeichenbar.

Bei einem weiteren erfindungsgemäßen Ausführungsbeispiel ist ein Temperatursensor im Bereich der Statorwicklung 20 angeordnet, dessen Anschlussleitungen ebenfalls durch den Durchlass 51 geführt ist.

### Bezugszeichenliste

- 1: Statorsegment
- 2: Vertiefung, insbesondere Schlitz
- 3: Seitenfläche, insbesondere Verbreiterung in Umfangsrichtung
- 4: Polschuhfläche, insbesondere luftspaltseitige Polschuhfläche, also dem Aktivteil des Rotors zugewandte Fläche des Polschuhs
- 5: Statorsteg
- 6: Statorjoch
- 20: Statorwicklung
- 21: Zuleitung
- 22: Ableitung
- 42: Polschuhrücken, insbesondere bauchig ausgeformt
- 43: Übergangsfläche
- 50: Kabelkanal
- 51: Ausnehmung, insbesondere Durchlass
- 52: Gehäuseteil
- 70: Schnittfläche
- 80: maximal bauchiger Verlauf des Polschuhrückens 42
- 81: Kantenverdickung
- 82: minimal bauchiger Verlauf des Polschuhrückens 42, insbesondere linearer, ebener oder gerader Verlauf
- 90: konkaver kreisabschnittsförmiger Verlauf
- 91: konvexer kreisabschnittsförmiger Verlauf
- 92: vereinfachter Verlauf, zusammengesetzt aus zwei ebenen Flächen

## Patentansprüche

1. Elektromaschine, insbesondere Transversalflussmaschine,
wobei der Stator aus einem Stapel von Strangsegmenten zusammengesetzt ist,
wobei jedes Strangsegment zumindest ein oder zumindest zwei Statorsegmente und eine Statorwicklung (20), insbesondere Einzelwicklung, aufweist,
wobei jedes Statorsegment (1) einen ringförmigen Statorsteg (5) aufweist, an welchem Polschuhe angeformt sind, insbesondere welche sich nach radial innen erstrecken und/oder welche auf den Rotor zu sich erstrecken und/oder welche zwischen Rotor und ringförmigem Statorsteg (5) angeordnet sind,
insbesondere wobei die Polschuhe gleichartig ausgeformt sind,
wobei die axiale Breite des Polschuhs mit zunehmendem Radialabstand von der luftspaltseitigen Fläche (4) des Polschuhs abnimmt,
wobei der zugehörige Verlauf zwischen einem ersten und einem zweiten Verlauf angeordnet ist,
wobei der erste Verlauf eine lineare Funktion des Radialabstandes ist, insbesondere wobei der zum ersten Verlauf gehörige Polrücken eine ebene Fläche ist,
wobei der zweite Verlauf eine Kreisfunktion, insbesondere Kreisabschnittsfunktion, ist, insbesondere wobei der zum zweiten Verlauf gehörige Polrücken eine Zylinderabschnittsfläche ist,
**dadurch gekennzeichnet, dass der zugehörige Verlauf der axialen Breite als Funktion des Radialabstandes aus einem konvexen Abschnitt und einem konkaven Abschnitt zusammengesetzt ist, wobei der konkave Abschnitt eine mindestens fünfmal kürzere Bogenlänge aufweist als der andere Abschnitt,**
**wobei der Polschuh eine mit zunehmendem Radialabstand zunehmende Breite in Umfangsrichtung aufweist,**
**insbesondere wobei mit zunehmendem Radialabstand die Zunahme der Breite in Umfangsrichtung im Wesentlichen in dem Maße, insbesondere umgekehrt proportional, verläuft wie die axiale Breite abnimmt.**

2. Elektromaschine nach Anspruch 1, **wobei der Polschuh derart geformt ist, dass im Wesentlichen kein Teilbereich des Polschuhs in Sättigung geht solange der Oberflächenbereich der luftspaltseitigen, insbesondere also der zum Rotor hin gewandten, Seitenfläche (3) des Polschuhs noch nicht in Sättigung geht,**
**wobei jedes Statorsegment (1) zwei radial verlaufende, in Umfangsrichtung voneinander mit halbem Polschuhabstand beabstandete** Schlitze (2) **aufweist,**
**insbesondere so dass beim Zusammenfügen zweier Statorsegmente zu einem Strangsegment die Schlitze in Deckung bringbar sind zur Bildung eines Durchlasses für die Zuleitung (21) und/oder Ableitung der jeweiligen Statorwicklung (20),**
**wobei das Statorsegment (1) aus gepresstem oder gesintertem Eisenpulver, insbesondere SMC, gefertigt ist**
**wobei die Statorwicklung (20) in einem Spulenkörper, insbesondere aus Kunststoff, aufgenommen ist,**
**wobei der Spulenkörper die** Schlitze (2) **zumindest teilweise auskleidet,**
**insbesondere wobei der Spulenkörper mit der von ihm zumindest teilweise umgebenen Statorwicklung (20) in einem Strangsegment aufgenommen ist, insbesondere wobei die Statorwicklung (20) als Ringwicklung ausgeführt ist.**

3. Elektromaschine nach Anspruch 1 oder 2,
**dadurch gekennzeichnet, dass**
der Polschuh an seiner vom anderen Statorsegment (1) abgewandten Seite eben ausgeführt ist, insbesondere zur Ermöglichung eines möglichst engen und berührenden Aufbau des Stapels der Strangsegmente.

4. Elektromaschine nach mindestens einem der vorangegangenen Ansprüche,
**dadurch gekennzeichnet, dass**
**die luftspaltseitige Oberfläche des Polschuhs einen im Wesentlichen gleichgroßen oder höchstens um 20 % unterschiedlichen Flächenwert aufweist im Vergleich zur Übergangsfläche (43) zum Statorsteg (5) hin.**

5. Elektromaschine nach mindestens einem der vorangegangenen Ansprüche,
**dadurch gekennzeichnet, dass**
der Polschuh einen Polrücken aufweist,
insbesondere wobei der Polrücken zumindest teilweise zur Statorwicklung (20) und/oder zumindest teilweise zum anderen Statorsegment (1) hin gewandt ist,
wobei der Polrücken die zum Rotor hin zugewandte, luftspaltseitige Fläche des Polschuhs mit dem Statorsteg (5), insbesondere mit der Statorstegoberfläche, verbindet.

6. Elektromaschine nach mindestens einem der vorangegangenen Ansprüche,
**dadurch gekennzeichnet, dass**
der Polschuh eine mit zunehmendem Radialabstand zunehmende Breite in Umfangsrichtung aufweist,
insbesondere wobei mit zunehmendem Radialabstand die Zunahme der Breite in Umfangsrichtung im Wesentlichen in dem Maße, insbesondere umgekehrt proportional, verläuft wie die axiale Breite abnimmt.

7. Elektromaschine nach mindestens einem der vorangegangenen Ansprüche,
**dadurch gekennzeichnet, dass**
der Polschuh symmetrisch zu einer Symmetrieebene ausgeformt ist, wobei die Symmetrieebene durch den Schwerpunkt des Polschuhs geht und von der vom Schwerpunkt ausgehenden, radialen Richtung und von der axialen Richtung aufgespannt wird und/oder dass
der Polschuh symmetrisch zu einer Symmetrieebene ausgeformt ist, wobei die Symmetrieebene durch den Schwerpunkt des Polschuhs geht und die Normalenrichtung Tangentialrichtung am Schwerpunkt ist.

8. Elektromaschine nach mindestens einem der vorangegangenen Ansprüche,
**dadurch gekennzeichnet, dass**
eine Kante des Polschuhs verbreitert ausgeführt ist, insbesondere zur Reduzierung der Gefahr eines Kantenbruchs.

9. Elektromaschine nach mindestens einem der vorangegangenen Ansprüche,
**dadurch gekennzeichnet, dass**
**mit zunehmendem Radialabstand der Flächenwert der Schnittfläche (70) des Polschuhs mit einer ersten Fläche im Wesentlichen dem Flächenwert der luftspaltseitigen, insbesondere also der zum Rotor hin gewandten, Seitenfläche (3) des Polschuhs gleicht oder zumindest um weniger als 10% oder 20% abweicht,**
- **wobei die erste Fläche eine Tangentialebene ist, die zur Rotorwellenachse den jeweiligen Radialabstand aufweist und/oder die zur Rotorwellenachse parallel ausgerichtet ist und/oder die den Radialabstand aufweist und/oder die senkrecht zur Symmetrieebene ausgerichtet ist und/oder deren Normalenrichtung die Rotorwellenachse mit dem Schwerpunkt des Polschuhs verbindet**
- **oder wobei die erste Fläche eine Zylindermantelfläche ist, die zur Rotorwellenachse den jeweiligen Radialabstand aufweist und/oder die parallel zur Rotorwellenachse ausgerichtet ist.**

10. Elektromaschine nach mindestens einem der vorangegangenen Ansprüche,
**dadurch gekennzeichnet, dass**
der Stapel in einem Gehäuseteil (52) aufgenommen ist,
insbesondere wobei das Gehäuseteil (52) einen axial verlaufenden Kabelkanal (50) aufweist, insbesondere eine axial verlaufende Vertiefung an seiner dem Stapel zugewandten Fläche, insbesondere Innenfläche.
insbesondere wobei das Gehäuseteil (52) kraftschlüssig mit dem Stapel verbunden ist,
insbesondere wobei das Gehäuseteil (52) thermisch aufgeschrumpft oder geklebt.

11. Verfahren zum Herstellen einer Elektromaschine nach mindestens einem der vorangegangenen Ansprüche,
**dadurch gekennzeichnet, dass**
die Schlitze (2) bei der Herstellung des Stapels von einer Fertigungsmaschine zum Ausrichten, **also zum Einstellen des relativen Verdrehwinkels der Strangsegmente zueinander, detektiert und/oder verwendet** werden.

## Claims

1. Electric machine, in particular transversal flux machine,
wherein the stator is composed of a stack of phase segments,
wherein each phase segment has at least one or at least two stator segments and a stator winding (20), in particular single winding,
wherein each stator segment (1) has an annular stator web (5), on which the pole shoes are integrally formed, in particular which extend radially inwards and/or which extend in the direction of the rotor and/or which are arranged between the rotor and the annular stator web (5),
in particular wherein the pole shoes have the same shape,
wherein the axial width of the pole shoe decreases with increasing radial distance from the air-gap-side surface (4) of the pole shoe,
wherein the associated profile is arranged between a first and a second profile,
wherein the first profile is a linear function of the radial distance, in particular wherein the pole back associated with the first profile is a planar surface,
wherein the second profile is a circular function, in particular circular segment function,
in particular wherein the pole back associated with the second profile is a cylindrical section area,
**characterised in that**
the associated profile of the axial width as a function of the radial distance is composed of a convex section and a concave section, the concave section having an arc length at least five times shorter than the other section,
wherein the pole shoe has a width in the circumferential direction which increases with increasing radial distance,
in particular wherein with increasing radial distance, the increase of the width in the circumferential direction is substantially in proportion, in particular in inverse proportion, to the decrease of the axial width.

2. Electric machine according to claim 1,
wherein the pole shoe is shaped in such a way that substantially no subregion of the pole shoe goes into saturation as long as the surface area of the air-gap-side side surface (3) of the pole shoe, in particular therefore of the side surface (3) of the pole shoe facing the rotor, does not go into saturation yet,
wherein each stator segment (1) has two radially extending slots (2), which are set apart from each other by half a pole shoe distance in the circumferential direction,
in particular so that when joining two stator segments to form a phase segment, the slots are able to be brought into congruence to form a passage for the incoming line (21) and/or the outgoing line of the respective stator winding (20), wherein the stator segment (1) is made from pressed or sintered iron powder, in particular SMC,
wherein the stator winding (20) is accommodated in a coil body, in particular made of plastic,
wherein the coil body at least partially lines the slots (2),
in particular wherein the coil body, with the stator winding (20) at least partially surrounded by it, is accommodated in a phase segment,
in particular wherein the stator winding (20) is configured as a ring winding.

3. Electric machine according to Claim 1 or 2,
**characterised in that**
the pole shoe is of planar design on its side facing away from the other stator segment (1), in particular in order to allow as far as possible a tight and contacting construction of the stack of the phase segments.

4. Electric machine according to at least one of the preceding claims,
**characterised in that**
the air-gap-side surface of the pole shoe has an area value of substantially the same size or which differs by maximally 20% in comparison with the transition area (43) towards the stator web (5).

5. Electric machine according to at least one of the preceding claims,
**characterised in that** the pole shoe has a pole back,
in particular wherein the pole back at least partially faces in the direction of the stator winding (20) and/or at least partially faces in the direction of the other stator segment (1),
wherein the pole back connects the air-gap-side surface of the pole shoe facing the rotor to the stator web (5), in particular to the stator web surface.

6. Electric machine according to at least one of the preceding claims,
**characterised in that**
the pole shoe has a width in the circumferential direction which increases with increasing radial distance,
in particular wherein with increasing radial distance, the increase of the width in the circumferential direction is substantially in proportion, in particular in inverse proportion, to the decrease of the axial width.

7. Electric machine according to at least one of the preceding claims,
**characterised in that**
the pole shoe is shaped symmetrically to a plane of symmetry, the plane of symmetry passing through the centre of gravity of the pole shoe and being defined by the radial direction starting from the centre of gravity and by the axial direction,
and/or **in that**
the pole shoe is shaped symmetrically to a plane of symmetry, the plane of symmetry passing through the centre of gravity of the pole shoe and the normal direction being a tangential direction at the centre of gravity.

8. Electric machine according to at least one of the preceding claims,
**characterised in that**
an edge of the pole shoe has a widened design, in particular in order to reduce the risk of an edge fracture.

9. Electric machine according to at least one of the preceding claims,
**characterised in that**
with increasing radial distance, the area value of the sectioned area (70) of the pole shoe with a first area is substantially equal to the area value of the air-gap-side side surface (3) of the pole shoe, in particular therefore to the side surface (3) of the pole shoe facing the rotor, or at least deviates by less than 10% or 20%,
- wherein the first area is a tangential plane which has the respective radial distance to the rotor shaft axis and/or which is aligned parallel to the rotor shaft axis and/or which has the radial distance and/or which is aligned perpendicularly to the plane of symmetry and/or whose normal direction connects the rotor shaft axis to the centre of gravity of the pole shoe,
- or wherein the first area is a cylinder lateral area which has the respective radial distance to the rotor shaft axis and/or which is aligned parallel to the rotor shaft axis.

10. Electric machine according to at least one of the preceding claims,
**characterised in that**
the stack is accommodated in a housing component (52),
in particular wherein the housing component (52) has an axially extending cable channel (50), in particular an axially extending depression on its surface, in particular inner surface, facing the stack,
in particular wherein the housing component (52) is connected to the stack in a force-locking manner,
in particular wherein the housing component (52) is thermally shrunk-on or bonded.

11. Method for producing an electric machine according to at least one of the preceding claims,
**characterised in that**,
during the production of the stack, the slots (2) are detected and/or used by a production machine for aligning, that is to say adjusting, the relative angle of rotation of the phase segments with respect to.one another.

## Revendications

1. Machine électrique, en particulier machine à flux transversal,
sachant que le stator est constitué d'un empilement de segments de phase,
sachant que chaque segment de phase présente au moins un ou au moins deux segments de stator et un enroulement de stator (20), en particulier une unique spire,
sachant que chaque segment de stator (1) présente une partie (5) annulaire de liaison de stator sur laquelle sont formés des pièces polaires, en particulier des pièces polaires qui s'étendent radialement vers l'intérieur et/ou qui s'étendent en direction du rotor et/ou qui sont disposées entre le rotor et la partie (5) annulaire de liaison de stator,
sachant que les pièces polaires sont notamment d'une conformation similaire,
sachant que la largeur axiale de la pièce polaire diminue à mesure que la distance radiale par rapport à la surface (4) côté entrefer de la pièce polaire augmente,
sachant que l'allure associée est disposée entre une première et une deuxième allure, sachant que la première allure est une fonction linéaire de la distance radiale, sachant en particulier que le dos de pôle associé à la première allure est une surface plane,
sachant que la deuxième allure est une fonction circulaire, en particulier une fonction de segment de cercle, sachant en particulier que le dos de pôle associé à la deuxième allure est une surface de section de cylindre,
**caractérisée en ce que** l'allure associée de la largeur axiale en fonction de la distance radiale est composée d'une partie convexe et d'une partie concave, sachant que la partie concave présente une longueur d'arc au moins cinq fois plus courte que l'autre partie, sachant que la pièce polaire présente une largeur en direction périphérique qui augmente à mesure que la distance radiale augmente,
sachant notamment que l'augmentation de la largeur en direction périphérique à mesure que la distance radiale augmente évolue sensiblement dans la même mesure que la diminution de la largeur axiale, en particulier de manière inversement proportionnelle.

2. Machine électrique selon la revendication 1,
sachant que la pièce polaire est façonnée de telle sorte, pour l'essentiel, aucune région partielle de la pièce polaire ne sature tant que la région superficielle de la surface latérale (3) côté entrefer, donc notamment orientée en direction du rotor, de la pièce polaire ne sature pas encore,
sachant que chaque segment de stator (1) présente deux fentes (2) s'étendant radialement et espacées l'une de l'autre en direction périphérique d'une distance égale à la moitié de l'espacement des pièces polaires,
en particulier de telle sorte que, lors de l'assemblage de deux segments de stator pour former un segment de phase, les fentes peuvent être amenées en coïncidence afin de former un passage pour la ligne d'alimentation (21) et/ou la ligne de sortie de l'enroulement de stator respectif (20),
sachant que le segment de stator (1) est fabriqué en poudre de fer comprimée ou frittée, en particulier en préimprégné (SMC),
sachant que l'enroulement de stator (20) est reçu dans une carcasse de bobine, en particulier en matière plastique,
sachant que la carcasse de bobine garnit au moins partiellement les fentes (2),
sachant notamment que la carcasse de bobine, avec l'enroulement de stator (20) qu'elle entoure au moins partiellement, est reçue dans un segment de phase,
sachant notamment que l'enroulement de stator (20) est réalisé sous forme d'enroulement annulaire.

3. Machine électrique selon la revendication 1 ou 2, **caractérisée en ce que** la pièce polaire est réalisée plane sur son côté éloigné de l'autre segment de stator (1), en particulier afin de permettre une structure la plus serrée et en contact possible de l'empilement des segments de phase.

4. Machine électrique selon au moins une des revendications précédentes, **caractérisée en ce que** la surface côté entrefer de la pièce polaire présente une valeur de superficie sensiblement identique à la surface de transition (43) en direction de la partie (5) de liaison de stator, ou différente d'au plus 20 %.

5. Machine électrique selon au moins une des revendications précédentes, **caractérisée en ce que** la pièce polaire présente un dos de pôle,
sachant notamment que le dos de pôle est orienté au moins partiellement en direction de l'enroulement de stator (20) et/ou au moins partiellement en direction de l'autre segment de stator (1),
sachant que le dos de pôle relie la surface côté entrefer, tournée en direction du rotor, de la pièce polaire à la partie (5) de liaison de stator, en particulier à la surface de la partie de liaison de stator.

6. Machine électrique selon au moins une des revendications précédentes, **caractérisée en ce que** la pièce polaire présente une largeur en direction périphérique qui augmente à mesure que la distance radiale augmente,
sachant en particulier que l'augmentation de la largeur en direction périphérique à mesure que la distance radiale augmente évolue sensiblement dans la même mesure que la diminution de la largeur axiale, en particulier de manière inversement proportionnelle.

7. Machine électrique selon au moins une des revendications précédentes, **caractérisée en ce que** la pièce polaire est façonnée symétriquement à un plan de symétrie, sachant que le plan de symétrie passe par le centre de gravité de la pièce polaire et est sous-tendu par la direction radiale partant du centre de gravité et par la direction axiale,
et/ou **en ce que** la pièce polaire est façonnée symétriquement à un plan de symétrie, sachant que le plan de symétrie passe par le centre de gravité de la pièce polaire et que la direction normale est la direction tangentielle au centre de gravité.

8. Machine électrique selon au moins une des revendications précédentes, **caractérisée en ce qu'**un bord de la pièce polaire est réalisé élargi, en particulier afin de réduire le risque d'une ébréchure.

9. Machine électrique selon au moins une des revendications précédentes, **caractérisée en ce que**, avec l'augmentation de la distance radiale, la valeur de superficie de la surface d'intersection (70) de la pièce polaire avec une première surface devient sensiblement égale à la valeur de superficie de la surface latérale (3) côté entrefer, donc notamment orientée en direction du rotor, de la pièce polaire, ou au moins en diffère de moins de 10% ou 20%,
- sachant que la première surface est un plan tangentiel qui présente la distance radiale respective par rapport à l'axe de l'arbre de rotor et/ou qui est orienté parallèlement à l'axe de l'arbre de rotor et/ou qui présente la distance radiale et/ou qui est orienté perpendiculairement au plan de symétrie et/ou dont la direction normale relie l'axe de l'arbre de rotor au centre de gravité de la pièce polaire,
- ou sachant que la première surface est une surface d'enveloppe de cylindre qui présente la distance radiale respective par rapport à l'axe de l'arbre de rotor et/ou qui est orientée parallèlement à l'axe de l'arbre de rotor.

10. Machine électrique selon au moins une des revendications précédentes, **caractérisée en ce que** l'empilement est reçue dans une pièce (52) formant boîtier,
sachant en particulier que la pièce (52) formant boîtier présente un caniveau de câbles (50) s'étendant axialement, en particulier un renfoncement s'étendant axialement sur sa surface tournée vers l'empilement, en particulier sa surface intérieure,
sachant notamment que la pièce (52) formant boîtier est assemblée à force à l'empilement,
sachant en particulier que la pièce (52) formant boîtier est collée ou frettée à chaud.

11. Procédé de fabrication d'une machine électrique selon au moins une des revendications précédentes, **caractérisé en ce que** les fentes (2) sont, lors de la fabrication de l'empilement, détectées et/ou utilisées par une machine de fabrication aux fins d'alignement, donc de réglage de l'angle de rotation relative des segments de phase les uns par rapport aux autres.
